# EUROPÄISCHE PATENTSCHRIFT

(11) **EP 1 749 732 B1**
(45) Veröffentlichungstag und Bekanntmachung des Hinweises auf die Patenterteilung: **05.11.2008**
(21) Anmeldenummer: 06016425.8
(22) Anmeldetag: 07.08.2006
(51) Int. Cl.: B62D 31/02, B62D 47/02

(54) **Fahrerarbeitsplatzmodul für ein Nutzfahrzeug**
Driver's modul for industrial vehicle
Module de conduite pour véhicule utilitaire

(30) Priorität: 06.08.2005 DE 102005037190
(43) Veröffentlichungstag der Anmeldung: 07.02.2007
(73) Patentinhaber: MAN Nutzfahrzeuge Aktiengesellschaft, 80976 München (DE)
(72) Erfinder: Gülke, Norbert, 31139 Hildesheim (DE); Steinhoff, Jörg, 38259 Salzgitter (DE); Schönherr, Stephan, 38102 Braunschweig (DE)

(56) Entgegenhaltungen:
- EP-A- 1 218 234
- EP-A- 1 588 929
- DE-A1- 4 420 097
- FR-A- 893 936
- US-A1- 2004 036 266
- US-A1- 2005 049 944

## Beschreibung

Die Erfindung betrifft einen Fahrerarbeitsplatz für ein Nutzfahrzeug, insbesondere einen Omnibus nach dem Oberbegriff des Patentanspruches 1.

Ein derartiger Fahrerarbeitsplatz ist aus US 2004/036266 A1 bekannt, wobei der Fahrerarbeitsplatz im Buggerippe vormontiert ist und das Buggerippe in eine vorgegebene Modulöffnung eines zentralen Fahrzeuggerippes eingesetzt und mit dem zentralen Fahrzeuggerippe verbunden wird.

Neben verschiedenen bekannten Fahrerarbeitsplätzen für Nutzfahrzeuge, welche Fahrzeuge für den Güterverkehr, für Land- und Baufahrzeuge umfassen, sind Fahrerarbeitsplätze insbesondere beim Omnibusbau zu finden. Hier weist der Fahrerarbeitsplatz häufig sogar eine Abtrennung zwischen dem Fahrgastraum auf, welche durch eine Fahrerkabinentür oder durch einen erhöhten Bodenbereich gekennzeichnet ist. Bei Fahrzeugen, welche für den Rechtsverkehr bestimmt sind, befindet sich der Fahrerarbeitsplatz i.d.R. im Bugbereich auf der linken Seite des Fahrzeugs und bei Fahrzeugen, welche für den Linksverkehr bestimmt sind, auf der rechten Seite im Bug des Fahrzeugs.

Aus der DE 44 20 097 C2 ist ein Omnibus bekannt, wobei der Aufbau in einen Vorderteil, einen Hinterteil und einen dazwischen liegenden Mittelteil aufgeteilt ist. Das Vorderteil ist als Buggerippe aufgebaut, in dem ein Fahrerarbeitsplatz angeordnet ist. Das Buggerippe des Vorderteils hängt dabei an einer Dachstruktur des Fahrzeugs, und unterhalb des Vorderteils sind die Vorderräder angeordnet, welche durch einen U-förmig nach unten durchgewölbten Fahrschemel getragen sind, welcher ein Mittelstück mit nach oben auslaufenden Schenkeln aufweist, deren Enden mit jeweils nach seitlich außen abragenden Auslegern versehen sind, gegen die die Radaufstandskräfte nach oben abgestützt sind, und bei dem der Fahrschemel in Fahrzeuglängsrichtung gegen die Frontseite der Fahrgastzelle in dessen Bodenbereich und nach oben über Ausleger gegen das Buggerippe des Vorderteils abgestützt ist.

Ein Problem bei einem derartigen Aufbau entsteht dadurch, dass der gesamte Frontbereich des Fahrzeugs mit dem Fahrerarbeitsplatz am Fahrzeug selbst montiert ist und eine konstruktive Gesamteinheit bildet. Dadurch ergibt sich eine nach der Montage eine nicht mehr veränderbare Einheit aus dem Buggerippe, den tragenden Fahrzeugkomponenten und dem Fahrerarbeitsplatz. Die Montage erfordert eine sukzessive Aufeinanderfolge verschiedener Fügeoperationen, welche im Wesentlichen nicht zeitgleich ausführbar sind, wobei alle Fügeoperationen direkt am Fahrzeug vorgenommen werden müssen. Die Begrenzung der Montage direkt am Nutzfahrzeug ist somit zeitintensiv, da sie aufgrund der örtlichen Begrenzung Parallelmontagen behindert und nur jeweils aufeinander folgende Fügeoperationen möglich sind. Zudem ist eine Montage und Funktionsprüfung einzelner Komponenten im Montageverbund vor der Endmontage außerhalb des Nutzfahrzeugs nicht möglich. Dieses Montageproblem konzentriert sich insbesondere auf den Fahrerarbeitsplatz für ein Nutzfahrzeug, da dieser eine technische Zentraleinheit darstellt, in der elektrische, mechanische und fluidische Funktionskomponenten des Fahrzeugs zentral zusammengeführt sind.

Es ist daher die Aufgabe der vorliegenden Erfindung, einen Fahrerarbeitsplatz für ein Nutzfahrzeug zu schaffen, bei dem die Probleme des Standes der Technik vermieden werden und welcher insbesondere auf eine schnelle und wirtschaftliche Weise bereitgestellt wird, wobei die Komponenten des Fahrerarbeitsplatzes außerhalb des Nutzfahrzeugs, ggf. bei externen Zulieferern vormontierbar und bereits auf ein einwandfreies Zusammenspiel und die Funktion vorprüfbar sind.

Diese Aufgabe wird erfindungsgemäß durch einen Fahrerarbeitsplatz für ein Nutzfahrzeug mit den Merkmalen des Patentanspruchs 1 gelöst. Vorteilhafte Weiterbildungen der Erfindung sind in den abhängigen Ansprüchen angegeben.

Die Erfindung schließt die technische Lehre ein, dass der Fahrerarbeitsplatz als Fahrerarbeitsplatzmodul aufgebaut ist und ein Grundmodul aufweist, wobei die Submodule im Grundmodul außerhalb des Nutzfahrzeugs montierbar sind, und das Fahrerarbeitsplatzmodul über zumindest eine Modulöffnung im Buggerippe einsetzbar und verbindbar ist.

Diese Lösung bietet den Vorteil, dass durch den modularen Aufbau eine Montage außerhalb des Nutzfahrzeugs möglich ist. Der modulare Fahrerarbeitsplatz ist im Wesentlichen aus einem Grundmodul aufgebaut, in welchem mehrere Submodule montierbar sind. In das Grundmodul können dabei mittels einer Transport- oder Haltevorrichtung die Submodule in freier und ergonomischer Montage gefügt werden, wobei die Montage außerhalb des Nutzfahrzeugs beispielsweise bei einem Zulieferer erfolgen kann. Das fertig montierte Fahrerarbeitsplatzmodul ist damit schon außerhalb des Nutzfahrzeugs auf die Funktion der einzelnen als Submodule ausgeführten Komponenten prüfbar, da diese bereits aufgrund ihrer Einzelmontage in Betrieb genommen werden können und hinsichtlich ihrer Funktion im Zusammenspiel mit den übrigen im modularen Fahrerarbeitsplatz montierten Komponenten getestet werden können. Bei einem Auftreten von Fehlfunktionen können im modularen Fahrerarbeitsplatz vereinfacht defekte Submodule getauscht bzw. die Fehler behoben werden, da eine bessere Zugänglichkeit gegeben ist als im eingebauten Zustand des modularen Fahrerarbeitsplatzes im Fahrzeug. Die Montage des modularen Fahrerarbeitsplatzes kann unabhängig vom Montagestadium des Nutzfahrzeugs erfolgen, womit sich der logistische Planungsaufwand am Montageort des Nutzfahrzeugs selbst verringert. Der modulare Fahrerarbeitsplatz kann so ausgeführt sein, dass dieser mit allen montierten Submodulen nach einer vollständigen Inbetriebnahme mittels einer geeigneten Hebe- /Schiebevorrichtung in die jeweils gewählte Modulöffnung am Buggerippe des Nutzfahrzeugs eingesetzt wird. Die Hebe/Schiebevorrichtung wird erst nach erfolgter Verbindung des modularen Fahrerarbeitsplatzes mit der Modulöffnung des Buggerippes entfernt. Die Verbindung des Fahrerarbeitsplatzmoduls umfasst dabei neben der mechanischen Verbindung des Grundmoduls mit dem Buggerippe einzelne mechanische, elektrische oder fluidische Verbindungen der Submodule mit dem Fahrzeug.

Das Buggerippe des Nutzfahrzeugs weist dabei an der linken Fahrzeugseite und/ oder an der rechten Fahrzeugseite zumindest eine standardisierte Modulöffnung zur Aufnahme des modularen Fahrerarbeitsplatzes auf. Abhängig von der Nutzung des Fahrzeugs im Rechts- oder Linksverkehr wird der modulare Fahrerarbeitsplatz in der linken oder in der rechten Modulöffnung eingesetzt. Die Modulöffnung kann beispielsweise derart standardisiert sein, dass das jeweilige Links- oder Rechtslenkermodul sowohl in der linken als auch in der rechten Modulöffnung eingesetzt werden kann, wobei die Standardisierung sogar modellübergreifend ausgeführt sein kann. Die Standardisierung kann sowohl passende Montageschnittstellen als auch die Passung der Kontur des modularen Fahrerarbeitsplatzes an den Übergängen zum restlichen Fahrzeug umfassen, sodass beispielsweise die Außenverkleidung des Moduls mit der Außenverkleidung des Fahrzeugs einen Übergang aufweist, welcher bündig abschließt. Weiterhin kann die Standardisierung die mechanischen Schnittstellen wie beispielsweise die Lenkung oder optional das Schaltungsgestänge umfassen.

Eine weitere die Erfindung verbessernde Maßnahme sieht vor, dass zumindest eine Armaturenbrettabdeckung, ein Instrumententräger, eine Lenkungseinheit, ein seitliches Bedienfeld, eine Fahrersitzeinheit sowie eine Pedalplatte als Submodule im Grundmodul des modularen Fahrerarbeitsplatzes montierbar sind. Abhängig vom Fahrzeugmodell und von der gewünschten Ausstattung werden die Submodule am Grundmodul vormontiert. Somit ist es modell- und ausstattungsabhängig, ob die Submodule bereits am modularen Fahrerarbeitsplatz montiert sind oder direkt am Buggerippe montiert werden. Beispielsweise kann die Armaturenbrettabdeckung am Buggerippe vormontiert werden, da diese im vorderen Außenbereich des Fahrerarbeitsplatzes angeordnet ist und aufgrund dieser Anordnung und ihrer Größe das spätere Einsetzen des modularen Fahrerarbeitsplatzes möglicherweise erschweren kann, jedoch ist ebenso eine Vormontage der Armaturenbrettabdeckung am modularen Fahrerarbeitsplatz möglich. Da die ergonomischen Anforderungen des Fahrzeugführers prinzipiell zwischen Linien- Überland- und Reisebussen gleich sind, können durch die Wahl von Oberflächenelementen im modularen Fahrerarbeitsplatz diese schon im Stadium der Vormontage entsprechend gewählt werden, sodass sowohl einfache, robuste Linien- Fahrerarbeitsplatzmodule als auch höherwertig ausgestattete Reise-Fahrerarbeitsplatzmodule zusammengesetzt werden können, ohne eine Änderung am Grundmodul vorzunehmen. Vorteilhafterweise muss somit nur einmal eine Grundentwicklung des Grundmoduls durchgeführt werden, wonach in der späteren Fertigung modular, schnell und kostenoptimiert bedarfsgerecht verschiedene Submodule auch unterschiedlicher Güte, jedoch mit gleichen Montageschnittstellen zum Grundmodul, montiert werden können. Weitere im modularen Fahrerarbeitsplatz vormontierte Komponenten können eine Fahrerkabinentür mit einem Einsatz für eine Fahrertasche oder ein Kassentragarm mit Verkleidung umfassen. Die Lenkungseinheit weist dabei ein Lenkrad mit einer Lenksäule auf, welche während oder nach dem Einbau des modularen Fahrerarbeitsplatzes in das Buggerippe mechanisch mit dem Lenkgestänge verbunden wird.

Eine weitere vorteilhafte Ausführungsform der Erfindung sieht vor, dass eine Fahrertrennwand und/oder eine Zentralkasse für Linienbusse als Submodule im Grundmodul des Fahrerarbeitsplatzmoduls montiert sind. Dabei kann die Rückseite der Fahrertrennwand, d.h. die direkt zum Fahrgastraum gerichtete Seite, wahlweise in geschlossener oder zu öffnender Form ausgeführt sein. Die Öffnung, z.B. eine Türöffnung für den Zugang zu einer komplett geschlossenen Fahrerarbeitskabine, kann beispielsweise mit einer Schwenktür, einer Schiebetür oder einer Rolltür ausgestattet sein. Dabei ist auch die Öffnung derart ausgestaltet, dass sie sowohl für eine Linkslenkervariante als auch für eine Rechtslenkervariante einsetzbar ist. Alternativ kann die Tür der Fahrerkabine in bekannter Weise seitlich vom Fahrersitz angeordnet sein. Dabei kann die Fahrerkabine vorteilhafterweise aus Submodulen zusammengesetzt sein, die außerhalb des Fahrzeugs auf dem Fahrerarbeitsplatzmodul vormontiert werden. Hier können einzelne Submodule beispielsweise integrierte Luftkanäle zur seperaten /individuellen Luftführung von Warm- oder Kaltluft für den Fahrer aus einer Heizung oder Klimaanlage aufweisen. Vorteilhafterweise können die Submodule der Fahrerkabine so gestaltet sein, dass unterschiedliche Ausbaustufen der Kabine durch die Nutzung entsprechender Einzelteile erreicht werden können, angefangen von einer offenen Kabine mit z.B. nur einer Trennwand hinter dem Fahrer, über teilweise geschlossene bis zu ganz geschlossenen Kabinenausführungen.

Vorteilhafterweise ist das Grundmodul des modularen Fahrerarbeitsplatzes als Linkslenkermodul oder als Rechtslenkermodul ausgebildet. Bei Fahrzeugen, welche für den Rechtsverkehr bestimmt sind, wird der modulare Fahrerarbeitsplatz im Buggerippe auf der linken Seite des Fahrzeugs und bei Fahrzeugen, welche für den Linksverkehr bestimmt sind, auf der rechten Seite im Bug des Fahrzeugs eingesetzt. Daher ist im Buggerippe des Fahrzeugs sowohl auf der linken Seite als auch auf der rechten Seite eine standardisierte Modulöffnung vorgesehen, welche ebenfalls standardisierte Montageschnittstellen zur Aufnahme des modularen Fahrerarbeitsplatzes aufweist. Die mechanische Verbindung wird dabei zwischen dem Fahrzeug und dem Grundmodul vorgenommen, wobei die Submodule mit der Peripherie im Fahrzeug elektrisch, mechanisch bzw. fluidisch verbunden werden. Um den modularen Fahrerarbeitsplatz an die entsprechende Lenkervariante anzupassen, können einzelne Subkomponenten wie beispielsweise der Schaltwählhebel mit Schaltkulisse oder der Kassentragarm mit Verkleidung entweder auf der linken oder auf der rechten Seite im Grundmodul vormontiert werden. Der Modulboden bildet einen wesentlichen Bestandteil des Grundmoduls, wobei sich die Grundform des Modulbodens zwischen der Linkslenkervariante und der Rechtslenkervariante unterscheidet, indem die Kontur und verschiedene Montageanschlüsse wie beispielsweise für die Fahrerkabinentür angepasst werden.

Als ein weiterer Vorteil der Erfindung wird vorgeschlagen, dass die Submodule standardisierte Verbindungselemente aufweisen, sodass diese sowohl in einem Linkslenkermodul als auch in einem Rechtslenkermodul einsetzbar sind. Die Verbindungselemente der Submodule sind so gewählt, dass eine Montage in beiden Modulen erfolgen kann, ohne Veränderungen am Submodul vorzunehmen oder verschiedene Submodule bereitzustellen, um die Varianz und damit die Teilevielfalt zu minimieren, wodurch erhebliche Kosteneinsparungen erzielbar sind. Submodule wie das seitliche Bedienfeld sind dabei vorteilhafterweise symmetrisch ausgeführt, um sowohl in einem Linkslenkermodul als auch in einem Rechtslenkermodul eingebaut zu werden. Auch das Fahrerfenster einschließlich einer manuell oder elektrisch zu bedienenden integrierten Öffnung kann symmetrisch ausgeführt sein, so dass eine Verwendung in einer Links- und Rechtslenkervariante ohne Probleme möglich ist. Das gleiche gilt für die Fahrertrennwand, die aus Einzelteilen bestehen kann, die so ausgeführt sind, dass eine Verwendung in einer Rechts- oder Linkslenkervariante ebenfalls ohne Probleme möglich ist.

Die Standardisierung insbesondere der Montageschnittstellen der Submodule zum Grundmodul kann auch für verschiedene Fahrerarbeitsplätze genutzt werden, sodass die Submodule für Linien- Überland- und Reisebusse gleichermaßen montierbar sind und die Teilevielfalt reduzierbar ist. Die Standardisierung der Submodule bietet eine Unabhängigkeit von der Links- oder Rechtslenkervariante, lediglich das Grundmodul bietet Unterscheidungsmerkmale, welche den modularen Fahrerarbeitsplatz an die Lenkervariante anpasst.

Nach einer möglichen Weiterbildung der Erfindung wird vorgeschlagen, dass am modularen Fahrerarbeitsplatz standardisierte Anschlüsse für Elektrik, Hydraulik und/oder Pneumatik vorbereitet sind. Die vorbereiteten Anschlüsse bieten vorteilhafterweise die Möglichkeit, beim Einsetzen und Befestigen des modularen Fahrerarbeitsplatzes in die standardisierte Modulöffnung am Fahrzeug lediglich die Verbindungen zwischen den Submodulen und den peripheren Komponenten im Fahrzeug vorzunehmen. Die Standardisierung der Anschlüsse ermöglicht dabei eine Unabhängigkeit von der Lenkervariante sowie von der Modellvariante des Fahrzeugs, wobei die Anschlussgegenstücke im Fahrzeug so platziert sind, dass eine Verbindung der Anschlüsse sowohl bei einem Einsetzen in der linken als auch in der rechten Modulöffnung im Buggerippe erfolgen kann. Insbesondere die elektrischen Anschlüsse der verschiedenen Submodule im modularen Fahrerarbeitsplatz können als eine zentrale elektrische Verbindung ausgeführt sein, sodass in Form eines Sammelanschlusses die Verbindung herstellbar ist, und nicht jedes Submodul einzeln verbunden werden muss. Ein weiterer Vorteil der vorbereiteten Anschlüsse ist die Möglichkeit der Vorprüfung der Einzelfunktionen der Submodule, indem die standardisierten Anschlüsse an eine externe Prüfvorrichtung angeschlossen werden, mit welcher der spätere Betrieb des Gesamtsystems getestet werden kann. Durch die Standardisierung der Anschlüsse kann die Prüfvorrichtung für verschiedene Ausstattungs- Modell- und Lenkervarianten einen einzigen Gegenanschluss aufweisen, welcher zur Verbindung mit den verschiedenen Varianten geeignet ist.

Eine vorteilhafte Ausgestaltung der Erfindung sieht vor, dass die Submodule mit dem Grundmodul durch Steckverbindungen, Schraubverbindungen oder Klebeverbindungen verbunden sind. Diese Verbindungsmittel ermöglichen vorteilhafterweise eine einfache und kostenminimale Verbindungstechnik, wobei die Verbindungselemente selbst ebenfalls Standardkomponenten wie Schrauben, etc. umfassen können. Damit ist auch eine nachträgliche Demontage wieder möglich, beispielsweise für eine endgültige Demontage des modularen Fahrerarbeitsplatzes, zur Umrüstung auf ein anderes Fahrzeug, eine andere Ausstattungsvariante oder sogar von einem Linkslenker- auf ein Rechtslenkermodul. Auch Klebetechniken gestatten wie allgemein bekannt ein Lösen der Verbindung durch thermische oder chemische Einwirkung auf die Klebeverbindung, sodass hierdurch keine Einschränkung hinsichtlich der Demontierbarkeit der Submodule vom Grundmodul gesehen werden muss. Insbesondere Klebeverbindungen zeichnen sich durch vorteilhafte Eigenschaften für den Einsatz als Verbindungstechnik in dynamisch belasteten Bereichen wie einem Nutzfahrzeug aus, das die Klebeverbindungen eine Dämpfungswirkung aufweisen, welche Geräusche wie ein Klappern oder ein Quietschen verhindern und sich im Betrieb nicht lockern oder lösen.

Eine Erweiterung des Umfangs der vormontierten Komponenten des modularen Fahrerarbeitsplatzes ist dadurch möglich, dass dieser ferner ein Seitenfenster mit elektrisch oder manuell betätigbarem Fahrerfenster aufweist. Damit umfasst der modulare Fahrerarbeitsplatz sogar Teile der Außenverkleidung des Fahrzeugs. Im Bereich des seitlich angeordneten Fahrerfensters kann beispielsweise ein Luftkanal integriert sein, der für die Ansaugung von Außenluft für die Klimaanlage des Fahrerarbeitsplatzes aus der oberen Fahrzeugaußenseite vorgesehen ist. Der Kanal hat dann eine Öffnung nach Außen und eine Verbindung zu einer im Zwischenboden angeordneten Klimaanlage.

Unter dem seitlich angeordneten Fahrerfenster kann sich als weiterer Bestandteil der Außenverkleidung des Fahrzeugs und damit als weiteres Submodul eine Seitenklappe befinden, mittels der der Zugang zu den Submodulen im seitlichen Bedienfeld des Fahrerarbeitsplatzmoduls auch noch im eingebauten Zustand ermöglicht wird, wobei die Seitenklappe von außen geöffnet werden kann.

Weiterhin sind am Grundmodul und am Buggerippe Verbindungsmittel zum lösbaren Befestigen des in das Buggerippe eingeschobenen modularen Fahrerarbeitsplatzes vorgesehen. Diese Verbindungsmittel können beispielsweise als Schraubenverbindung und/ oder als Klebeverbindung ausgeführt sein. Durch eine Lösbarkeit der Verbindung kann vorteilhafterweise bei einer späteren Änderung des Nutzfahrzeugs bei geänderten Nutzungsbedingungen wie der Verkehrsrichtung oder dem Einsatz des modularen Fahrerarbeitsplatzes in einem anders genutzten Fahrzeug wie ein Linien- oder Reisebus das Modul demontiert werden und in einem anderen Fahrzeug weiterbetrieben werden bzw. das Fahrzeug mit einem anderen Modul ausgestattet werden. Die Demontage kann soweit vereinfacht werden, dass sogar zu Wartungs- oder Reparaturzwecken ein vorübergehender Ausbau sinnvoll ist.

Vorteilhafterweise weist das Grundmodul ein Modulboden auf, wobei der Modulboden im eingebauten Zustand des modularen Fahrerarbeitsplatzes im Kraftfahrzeug gegenüber dem Boden im Innenraum des Kraftfahrzeuges erhöht ist und damit einen Zwischenraum umfasst, in welchem ein oder mehrere Submodule integrierbar sind. Das Fahrerarbeitsplatzmodul besitzt dabei einen eigenen Boden, welcher zum Innenraumboden des Fahrzeugs eine Erhöhung aufweist, womit ein Zwischenraum zur Aufnahme verschiedener Submodule wie die Hauptschalttafel, die Klimaanlage oder Prüfanschlüsse entsteht. Die Höhe dieses separaten Bodens kann je nach Nutzungsanforderung unterschiedlich ausgeführt sein, wobei jedoch eine Mindesthöhe nicht unterschritten werden kann, da sich die Höhe aus dem größten im Zwischenraum integrierten Submodul ergibt. Alle Submodule, welche in diesem Zwischenraum integriert sind, sind so ausgeführt, dass sie sowohl für die Links- als auch für die Rechtslenkervariante des Moduls unverändert eingesetzt werden können. Am Rand des Zwischenraums können verschließbare Öffnungen vom Fahrzeuginnenraum zum Zwischenraum vorgesehen werden, um einen Zugang zu den Submodulen im Zwischenraum zu ermöglichen. Durch diese Öffnungen können kleinere Wartungen der Submodule vorgenommen werden oder Anschlüsse für Diagnose- oder Prüfgeräte erreichbar sein.

Schließlich ist bei einer vorteilhaften Ausführungsform der vorliegenden Erfindung vorgesehen, dass ein Bauraum zur Aufnahme von Einschubmodulen quer zur Fahrtrichtung vom über der Fahrersitzeinheit angeordnet ist. Dieser Bauraum, auch als "Eurokasten" bezeichnet, wird beispielsweise durch ein Gehäuse mit Aufnahmemöglichkeiten für 19' Einschübe und DIN-Einschübe realisiert, in denen z.B. Radio, Klimasteuerung, Funkgerät und dergleichen aufgenommen werden. Die angegebene Anordnung ist besonders vorteilhaft bei einer komplett geschlossenen Fahrerkabine und Zugang von hinten durch eine entsprechend ausgeführte Öffnung. Der Bauraum sollte dabei so vom über dem Fahrer angeordnet sein, dass bei sitzender Position des Fahrers ein ergonomischer Zugang zu den Bedienelementen und gleichzeitig freie Sicht gewährleistet ist. Ferner ist es vorteilhaft, dass eine drehbare Fahrersitzeinheit vorgesehen ist, die in einem Bereich von 0° bis 360°, vorzugseise von 0° bis 180° und besonders bevorzugt in einem Bereich von 0° bis 90° drehbar ist. Hierdurch werden ergonomisch günstige Arbeitsbedingungen geschaffen.

Nachfolgend wird eine vorteilhafte Ausführungsform der vorliegenden Erfindung zusammen mit der Beschreibung der Figuren näher dargestellt. Es zeigt:
- Fig. 1: eine schematische Darstellung eines modularen Fahrerarbeitsplatzes in der Ausführung einer Linkslenkervariante;
- Fig. 2: eine Draufsicht eines modularen Fahrerarbeitsplatzes, welcher in einem Omnibus eingebaut ist;
- Fig. 3: eine Seitenansicht eines modularen Fahrerarbeitsplatzes, welcher in einem Omnibus eingebaut ist; und
- Fig. 4: eine schematische Darstellung eines Nutzfahrzeugs mit mehreren Modulöffnungen.

Bei den Figuren handelt es sich lediglich um beispielhafte schematische Darstellungen.

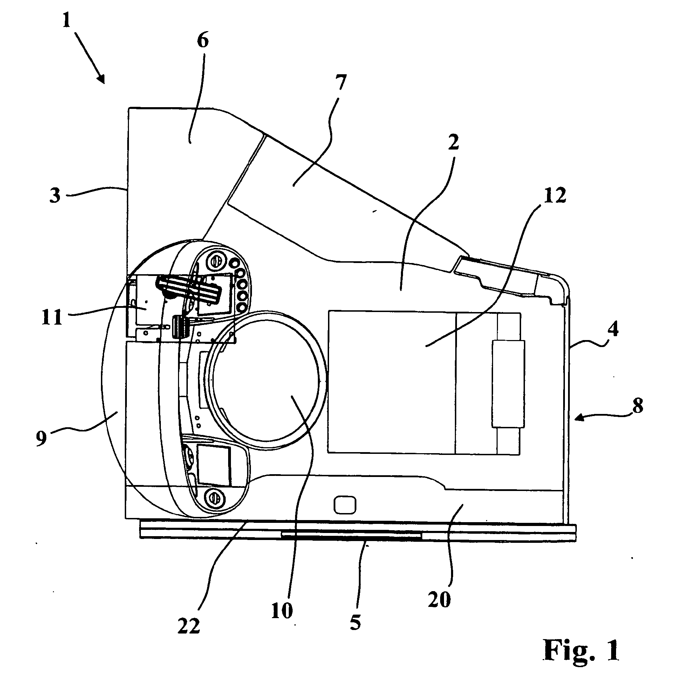

In Fig. 1 ist eine schematische Darstellung eines Fahrerarbeitsplatzes 1 in der Ausführung einer Linkslenkervariante gezeigt. Die Grundform des Fahrerarbeitsplatzes 1 wird im Wesentlichen durch die Form des Modulbodens 2 bestimmt, wobei die Frontseite 3 des Fahrerarbeitsplatzes breiter ausgeführt ist als die parallel verlaufende Heckseite 4. Rechtwinklig zur Frontseite 3 und zur Heckseite 4 ist eine Seitenwand mit einem Seitenfenster 5 angeordnet, wobei sich das Seitenfenster 5 an der (Fahrzeug-) Außenseite des modularen Fahrerarbeitsplatzes 1 und damit des Nutzfahrzeugs befindet. Die der Außenseite abgewandte Innenseite des modularen Fahrerarbeitsplatzes 1 verläuft schräg zwischen der Frontseite 3 und der Heckseite 4 des modularen Fahrerarbeitsplatzes 1 und wird durch den Kassentragarm 6 und die Fahrerkabinentür 7 gebildet. Die mechanische Grundstruktur des modularen Fahrerarbeitsplatzes wird hauptsächlich mittels des Modulbodens 2 aus einem Grundmodul 8 gebildet, an welchem die Submodule wie das Seitenfenster 5, der Kassentragarm 6 und die Fahrerkabinentür 7 befestigt werden. Weitere in der Darstellung gezeigte Submodule sind der Instrumententräger 9, das seitliche Bedienfeld 20 und die Lenkungseinheit 10, welche aus einem Lenkrad mit einer Lenksäule gebildet ist. Im Modulboden 2 ist eine Pedalplatte 11 angebracht, welche im Wesentlichen unterhalb des Instrumententrägers 9 angeordnet ist. In ergonomischer Anordnung zur Lenkungseinheit 10 ist ein Fahrersitz 12 im Modulboden 2 montiert.

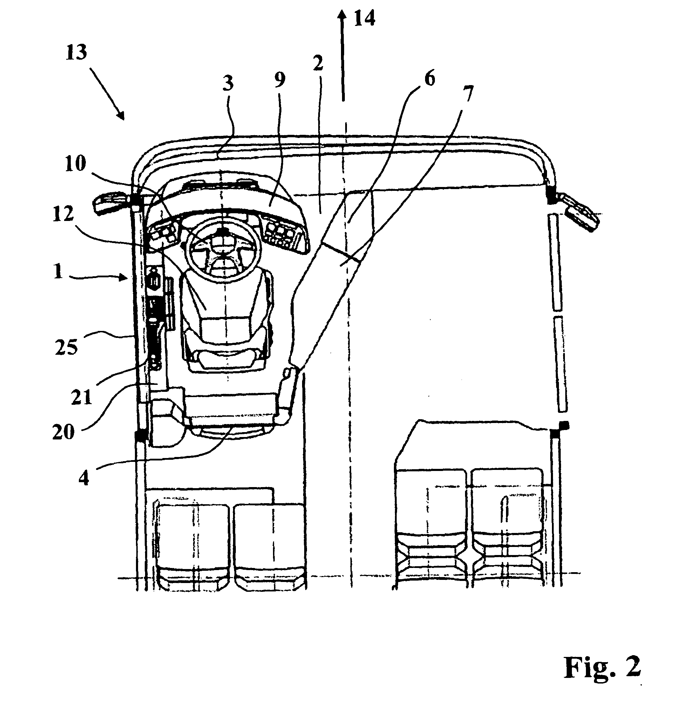

Fig. 2 ist eine Draufsicht eines modularen Fahrerarbeitsplatzes, welcher auf der linken Seite im Buggerippe in einem Omnibus eingebaut ist. Der modulare Fahrerarbeitsplatz 1 ist zum Nutzfahrzeug 13 abgegrenzt durch die Frontseite 3, den Kassentragarm 6, die Fahrerkabinentür 7 und die Heckseite 4, wobei die Abgrenzung des Moduls 1 zur Außenseite des Fahrzeugs 13 durch das verschiedene Bedientafeln 21 umfassende seitliche Bedienfeld 20 bzw. die Außenverkleidung 25 gegeben ist. Weiterhin weist der modulare Fahrerarbeitsplatz 1 eine Lenkungseinheit 10 und eine Fahrersitzeinheit 12 auf, welcher auf dem Modulboden 2 montiert ist.

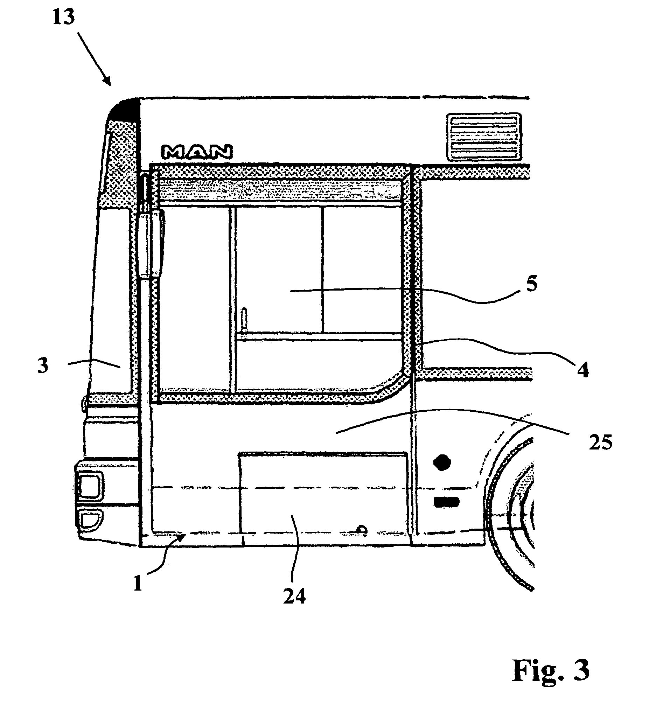

Fig. 3 zeigt eine Seitenansicht eines modularen Fahrerarbeitsplatzes 1, welcher in einem Omnibus eingebaut ist. Der modulare Fahrerarbeitsplatz 1 umfasst zur seitlichen Abgrenzung des Nutzfahrzeugs 13 nach außen eine Außenverkleidung 25, welche in Fahrtrichtung durch die Frontseite 3 und in der Heckrichtung durch die Heckseite 4 begrenzt ist. Wenn der modulare Fahrerarbeitsplatz 1 in das Fahrzeug 13 eingeschoben ist, schließt die Außenverkleidung 25 bündig mit der übrigen Außenverkleidung des Fahrzeugs 13 ab. In der Außenverkleidung 25 ist ein Seitenfenster 5 eingefasst, welches vom Fahrer geöffnet bzw. geschlossen werden kann. Unterhalb des Seitenfensters 5 befindet sich als Bestandteil der Außenverkleidung 25 eine Seiteklappe 24, welche im vorliegenden Ausführungsbeispiel ebenfalls als Submodul ausgeführt ist. Mit der Seitenklappe 24 kann außerhalb des Fahrzeugs 13 ein Zugang zu den Submodulen ermöglich werden, welche sich im seitlichen Bedienfeld 20 befinden.

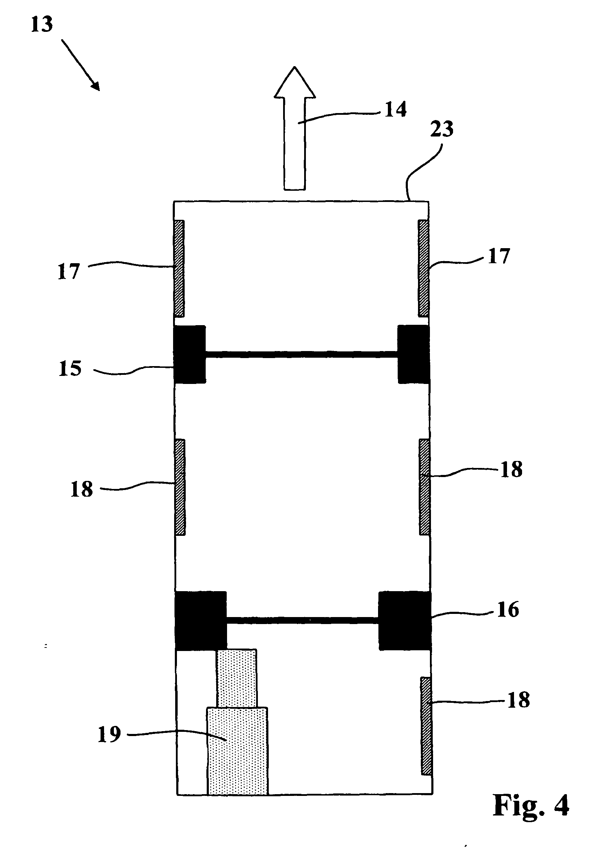

Fig. 4 zeigt eine Darstellung eines Nutzfahrzeugs 13, wobei die Fahrtrichtung 14 durch einen Pfeil angedeutet ist. Das Nutzfahrzeug 13 ist im dargestellten Ausführungsbeispiel ein Solofahrzeug mit zwei Achsen 15 und 16, wobei mehrere Modulöffnungen 17, 18 dargestellt sind. Die Modulöffnungen 17, 18 sind auf der rechten und linken Seite des Nutzfahrzeugs 13 angeordnet, wobei die Modulöffnungen 17 in Fahrtrichtung 14 vor der Vorderachse 15 angeordnet sind und zur Aufnahme eines modularen Fahrerarbeitsplatzes 1 oder eines Türmoduls (nicht dargestellt) geeignet sind. Die Modulöffnungen 18 sind zwischen der Vorderachse 15 und der Hinterachse 16 sowie im Heck des Nutzfahrzeugs 13 hinter der Hinterachse 16 vorhanden, und dienen beispielsweise der Aufnahme von Türmodulen (nicht dargestellt). Bei einer Linkslenkervariante des Omnibusses wird der modulare Fahrerarbeitsplatz 1 in die Modulöffnung 17 auf der linken Fahrzeugseite und bei einer Rechtslenkervariante auf der rechten Fahrzeugseite eingesetzt. Die Modulöffnungen 18 dienen im Wesentlichen der Aufnahme der Türmodule, wobei sich diese von den Modulöffnungen 17 unterscheiden oder konstruktiv baugleich ausgeführt sein können. Die Motor-Getriebeeinheit 19 befindet sich im Heck des Nutzfahrzeugs 13, und kann optional für die Links- oder die Rechtslenkervariante auf der rechten oder der linken Seite im Heck des Fahrzeugs angeordnet sein, wobei im vorliegenden Ausführungsbeispiel der linksseitige Einbau gezeigt ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- **1**: Fahrerarbeitsplatzmodul
- **2**: Modulboden
- **3**: Frontseite
- **4**: Heckseite
- **5**: Seitenfenster
- **6**: Kassentragarm
- **7**: Fahrerkabinentür
- **8**: Grundmodul
- **9**: Instrumententräger
- **10**: Lenkungseinheit
- **11**: Pedalplatte
- **12**: Fahrersitzeinheit
- **13**: Nutzfahrzeug
- **14**: Fahrtrichtung
- **15**: Vorderachse
- **16**: Hinterachse
- **17**: Modulöffnung
- **18**: Modulöffnung
- **19**: Motor-Getriebeeinheit
- **20**: seitliches Bedienfeld
- **21**: Bedientafel
- **22**: Anschlussseite
- **23**: Buggerippe
- **24**: Seitenklappe
- **25**: Außenverkleidung

## Patentansprüche

1. Fahrerarbeitsplatz für ein Nutzfahrzeug (13), insbesondere einen Omnibus, wobei der Fahrerarbeitsplatz mehrere Einzelkomponenten und das Nutzfahrzeug eine Modulöffnung am Fahrzeuggerippe aufweisen, **dadurch gekennzeichnet, dass** der Fahrerarbeitsplatz als eigenständig handhabbares Fahrerarbeitsplatzmodul (1) ausgebildet ist, welches ein Grundmodul mit mehreren Submodulen aufweist, wobei die Submodule im Grundmodul außerhalb des Nutzfahrzeugs (13) zu montieren sind, und das Fahrerarbeitsplatzmodul (1) definierte äußere Abmessungen aufweist, die an eine an der linken oder an der rechten Fahrzeugseite vorgegebene, standardisierte Modulöffnung (17) im Buggerippe (23) des Nutzfahrzeuges zum Einsetzen in die Modulöffnungen (17) zum Verbinden mit dem Buggerippe (23) angepasst sind.

2. Fahrerarbeitsplatz für ein Nutzfahrzeug (13) nach Anspruch 1,
**dadurch gekennzeichnet, dass** zumindest eine Armaturenbrettabdeckung, eine Bediententafel (9), eine Lenkungseinheit (10), ein seitliches Bedienfeld (20), eine Fahrersitzeinheit (12) sowie eine Pedalplatte (11) als Submodule im Grundmodul des Fahrerarbeitsplatzmoduls (1) montiert sind.

3. Fahrerarbeitsplatz für ein Nutzfahrzeug (13) nach Anspruch 1 und 2,
**dadurch gekennzeichnet, dass** ferner eine Fahrertrennwand und/oder eine Zentralkasse für Linienbusse als Submodule im Grundmodul des Fahrerarbeitsplatzmoduls (1) montiert sind.

4. Fahrerarbeitsplatz für ein Nutzfahrzeug (13) nach zumindest einem der vorgenannten Ansprüche,
**dadurch gekennzeichnet, dass** das Grundmodul des Fahrerarbeitsplatzmoduls (1) als Linkslenkermodul oder als Rechtslenkermodul ausgebildet ist.

5. Fahrerarbeitsplatz für ein Nutzfahrzeug (13) nach zumindest einem der vorgenannten Ansprüche,
**dadurch gekennzeichnet, dass** die Submodule standardisierte Verbindungselemente aufweisen, sodass diese sowohl in einem Linkslenkermodul als auch in einem Rechtslenkermodul einsetzbar sind.

6. Fahrerarbeitsplatz für ein Nutzfahrzeug (13) nach zumindest einem der vorgenannten Ansprüche,
**dadurch gekennzeichnet, dass** am Fahrerarbeitsplatzmodul (1) standardisierte Anschlüsse für Elektrik, Hydraulik, Pneumatik und/ oder sonstige mechanische Verbindungs- und Befestigungselemente vorgesehen sind.

7. Fahrerarbeitsplatz für ein Nutzfahrzeug (13) nach zumindest einem der vorgenannten Ansprüche,
**dadurch gekennzeichnet, dass** die Submodule mit dem Grundmodul durch Steckverbindungen, Schraubverbindungen oder Klebeverbindungen verbunden sind.

8. Fahrerarbeitsplatz für ein Nutzfahrzeug (13) nach zumindest einem der vorgenannten Ansprüche,
**dadurch gekennzeichnet, dass** das Fahrerarbeitsplatzmodul (1) ferner eine Außenbeplankung wahlweise mit Seitenklappe aufweist.

9. Fahrerarbeitsplatz für ein Nutzfahrzeug (13) nach zumindest einem der vorgenannten Ansprüche,
**dadurch gekennzeichnet, dass** das Fahrerarbeitsplatzmodul (1) ferner ein Seitenfenster (5) mit elektrisch oder manuell betätigbarem Fahrerfenster aufweist.

10. Fahrerarbeitsplatz für ein Nutzfahrzeug (13) nach zumindest einem der vorgenannten Ansprüche,
**dadurch gekennzeichnet, dass** am Grundmodul und am Buggerippe (23) Verbindungsmittel zum lösbaren Befestigen des in das Buggerippe (23) eingeschobenen Fahrerarbeitsplatzmoduls (1) vorgesehen sind.

11. Fahrerarbeitsplatz für ein Nutzfahrzeug (13) nach zumindest einem der vorgenannten Ansprüche,
**dadurch gekennzeichnet, dass** das Grundmodul einen Modulboden (2) aufweist, wobei der Modulboden (2) im eingebauten Zustand des Fahrerarbeitsplatzmoduls (1) im Kraftfahrzeug (13) gegenüber dem Boden im Innenraum des Kraftfahrzeuges (13) erhöht ist und einen Zwischenraum umfasst, in welchem ein oder mehrere Submodule integrierbar sind.

12. Fahrerarbeitsplatz für ein Nutzfahrzeug (13) nach zumindest einem der vorgenannten Ansprüche,
**dadurch gekennzeichnet, dass** ein Bauraum zur Aufnahme von Einschubmodulen quer zur Fahrtrichtung vorn über der Fahrersitzeinheit angeordnet ist.

13. Fahrerarbeitsplatz für ein Nutzfahrzeug (13) nach zumindest einem der vorgenannten Ansprüche,
**dadurch gekennzeichnet, dass** eine drehbare Fahrersitzeinheit vorgesehen ist, die in einem Bereich von 0° bis 360°, vorzugseise von 0° bis 180° und besonders bevorzugt in einem Bereich von 0° bis 90° drehbar ist.

## Claims

1. Driver's workplace for an commercial vehicle (13), in particular an omnibus, whereby the driver's workplace exhibits a number of individual components and the commercial vehicle (13) exhibits a module opening on the vehicle framework, **characterised in that** the driver's workplace takes the form of a separately handled driver's workplace module (1) exhibiting a basic module with a number of submodules, whereby the submodules are to be fitted in the basic module outside the commercial vehicle (13), and the driver's workplace module (1) exhibits defined external dimensions matched to a standardised module opening (17) in the front framework (23) of the commercial vehicle (13) on the left or right side of the vehicle for insertion in the module openings (17) and connection to the front framework (23).

2. Driver's workplace for an commercial vehicle (13) according to claim 1, **characterised in that** at least one dashboard covering, one control panel (9), one steering unit (10), one side control panel (20), one driver's seat unit (12) and one pedal plate (11) are attached as submodules in the basic module of the driver's workplace module (1).

3. Driver's workplace for an commercial vehicle (13) according to claims 1 and 2, **characterised in that** a driver partition and/or a central cashdesk for scheduled-service buses are attached as submodules in the basic module of the driver's workplace module (1).

4. Driver's workplace for an commercial vehicle (13) according to at least one of the above claims, **characterised in that** the basic module of the driver's workplace module (1) takes the form of a left-hand-drive or right-hand-drive module.

5. Driver's workplace for an commercial vehicle (13) according to at least one of the above claims, **characterised in that** the submodules exhibit standardised connecting elements so that they can be used in both a left-hand- and a right-hand-drive module.

6. Driver's workplace for an commercial vehicle (13) according to at least one of the above claims, **characterised in that** standardised electrical, hydraulic, pneumatic terminals and/or other mechanical connecting and attachment elements are provided on the driver's workplace module (1).

7. Driver's workplace for an commercial vehicle (13) according to at least one of the above claims, **characterised in that** the submodules are joined to the basic module by plugged connections, screwed connections or adhesive connections.

8. Driver's workplace for an commercial vehicle (13) according to at least one of the above claims, **characterised in that** the driver's workplace module (1) also exhibits outside panelling, optionally with a side flap.

9. Driver's workplace for an commercial vehicle (13) according to at least one of the above claims, **characterised in that** the driver's workplace module (1) also exhibits a side window (5) with an electrically or manually operated driver's window.

10. Driver's workplace for an commercial vehicle (13) according to at least one of the above claims, **characterised in that** connecting elements are provided on the basic module and the front framework (23) for releasable attachment of the driver's workplace module (1) when it is slid into the front framework (23).

11. Driver's workplace for an commercial vehicle (13) according to at least one of the above claims, **characterised in that** the basic module exhibits a module floor (2) which, when the driver's workplace module (1) is installed in the vehicle (13), is higher than the floor in the interior of the vehicle (13) and encloses a space in which one or more submodules can be integrated.

12. Driver's workplace for an commercial vehicle (13) according to at least one of the above claims, **characterised in that** a space to hold slide-in modules is arranged at the front above the driver's seat unit (12) and crosswise to the direction of travel.

13. Driver's workplace for an commercial vehicle (13) according to at least one of the above claims, **characterised in that** a rotating driver's seat unit is provided that can be turned in a range from 0 to 360°, preferably from 0 to 180° and most preferably in a range from 0 to 90°.

## Revendications

1. Poste de conduite pour un véhicule industriel (13), en particulier pour un bus, auquel cas le poste de conduite présente plusieurs composants individuels et le véhicule industriel présente une ouverture d'intégration du module au niveau de l'ossature du véhicule, **caractérisé en ce que** le poste de conduite se compose d'un module de poste de conduite maniable de manière autonome, qui présente un module de base avec plusieurs sous-modules, auquel cas les sous-modules doivent être montés dans le module de base en dehors du véhicule industriel (13), et **en ce que** le module de poste de conduite (1) présente des dimensions extérieures définies, qui sont adaptées à une ouverture pour module (17) standardisée, spécifiée du côté droit ou gauche du véhicule dans l'ossature de la partie avant (23) du véhicule industriel pour un montage dans les ouvertures pour module (17) à relier avec l'ossature de la partie avant (23).

2. Poste de conduite pour un véhicule industriel (13) selon la revendication 1
**caractérisé en ce qu'**au moins un cache de tableau de bord, une console de commande (9), une unité de direction (10), une console de commande latérale (20), une unité de siège chauffeur (12) ainsi qu'un pédalier (11) sont montés comme sous-modules dans le module de base du module de poste de conduite.

3. Poste de conduite pour un véhicule industriel (13) selon les revendications 1 et 2,
**caractérisé en ce qu'**en outre, une paroi de séparation chauffeur et/ou une caisse à monnaie pour bus de ligne sont montés comme sous-modules dans le module de base du module de poste de conduite (1).

4. Poste de conduite pour un véhicule industriel (13) selon au moins une des revendications mentionnées précédemment,
**caractérisé en ce que** le module de base du module de poste de conduite (1) est réalisé comme module à volant à gauche ou comme module à volant à droite.

5. Poste de conduite pour un véhicule industriel (13) selon au moins une des revendications mentionnées précédemment,
**caractérisé en ce que** les sous-modules présentent des éléments de liaison standardisés de telle manière que ceux-ci puissent être utilisés aussi bien dans un module à volant à gauche que dans un module à volant à droite.

6. Poste de conduite pour un véhicule industriel (13) selon au moins une des revendications mentionnées précédemment,
**caractérisé en ce que** des raccords électriques, hydrauliques et pneumatiques et/ou d'autres éléments de liaison et de fixation mécaniques sont prévus sur le module de poste de conduite (1).

7. Poste de conduite pour un véhicule industriel (13) selon au moins une des revendications mentionnées précédemment,
**caractérisé en ce que** les sous-modules sont reliés au module de base par des liaisons enfichées, des liaisons boulonnées ou des liaisons collées.

8. Poste de conduite pour un véhicule industriel (13) selon au moins une des revendications mentionnées précédemment,
**caractérisé en ce que** le module de poste de conduite (1) présente en outre un panneau extérieur, au choix avec portillon latéral.

9. Poste de conduite pour un véhicule industriel (13) selon au moins une des revendications mentionnées précédemment,
**caractérisé en ce que** le module de poste de conduite (1) présente en outre une baie latérale (5) avec baie chauffeur à actionnement électrique ou manuel.

10. Poste de conduite pour un véhicule industriel (13) selon au moins une des revendications mentionnées précédemment,
**caractérisé en ce que** des moyens de liaison sont prévus sur le module de base et sur l'ossature de la partie avant (23) pour fixer de manière desserrable le module de poste de conduite (1) intégré à l'ossature de la partie avant (23).

11. Poste de conduite pour un véhicule industriel (13) selon au moins une des revendications mentionnées précédemment,
**caractérisé en ce que** le module de base présente un plancher de module (2), auquel cas le plancher de module (2) est relevé par rapport au plancher de l'habitable du véhicule automobile (13) lorsque le module de poste de conduite (1) est monté et comprend un espace intermédiaire permettant d'intégrer un ou plusieurs sous-modules.

12. Poste de conduite pour un véhicule industriel (13) selon au moins une des revendications mentionnées précédemment,
**caractérisé en ce qu'**un espace de construction est disposé au-dessus de l'unité du siège chauffeur pour accueillir des modules encastrables perpendiculairement par rapport au sens de la marche.

13. Poste de conduite pour un véhicule industriel (13) selon au moins une des revendications mentionnées précédemment,
**caractérisé en ce qu'**une unité de siège chauffeur pivotable est prévue et celle-ci peut pivoter dans une plage de 0 à 360°, de préférence de 0 à 180° et en particulier dans une plage de 0 à 90°.
